# EUROPÄISCHE PATENTANMELDUNG

(11) **EP 3 527 361 A1**
(43) Veröffentlichungstag der Anmeldung: **21.08.2019**
(21) Anmeldenummer: 18157071.4
(22) Anmeldetag: 16.02.2018
(51) Int. Cl.: B32B 5/16, B32B 7/04, B32B 7/12, B32B 29/00, B32B 29/04, B32B 37/24, B32B 3/06, B32B 3/18

(54) **VERFAHREN ZUR HERSTELLUNG EINES MEHRSCHICHTIGEN SUBSTRATS**

(71) Anmelder: Henkel AG & Co. KGaA, 40589 Düsseldorf (DE)
(72) Erfinder: BOCHNIA, Roland, 40723 Hilden (DE); STRENGER, Stefan, 42579 Heiligenhaus (DE); BONGERS, Rainer, 60433 Frankfurt am Main (DE); ECKERS, Mario, 41844 Wegberg (DE)

(57) **Zusammenfassung**

Die vorliegende Erfindung betrifft ein Verfahren zur Herstellung eines mehrschichtigen Substrats, wobei das Substrat eine multifunktionelle Beschichtung umfasst sowie die Verwendung des hergestellten Substrats.

## Beschreibung

Die vorliegende Erfindung betrifft ein Verfahren zur Herstellung eines mehrschichtigen Substrats, wobei das Substrat eine multifunktionelle Beschichtung umfasst sowie die Verwendung des hergestellten Substrats.

Das Internet als Vertriebsweg für Waren aller Art hat in den letzten Jahren immer mehr an Bedeutung gewonnen. Den größten Anteil der Waren, die über das Internet verkauft werden, machen Bekleidung, Elektronik, Computer und Schuhe aus, aber auch Haushaltswaren, Möbel und Inneneinrichtungen sowie Waren des täglichen Bedarfs wie Lebensmittel, Drogerieartikel und Tierbedarf werden in zunehmendem Maße über das Internet bezogen. Damit die Waren zum Kunden gelangen, bedarf es nicht nur einer komplexen Logistik, sondern auch eines sicheren Transports, damit auch empfindliche oder zerbrechliche Ware beschädigungsfrei beim Kunden ankommt.

Eine sichere Verpackung der Waren lässt sich beispielsweise mit Hilfe von geeignetem Verpackungsmaterial erreichen, wobei das Verpackungsmaterial in der Regel eine Art Polsterung aufweist, durch die die zu transportierende Ware geschützt wird. Ein klassisches Beispiel für ein solches Verpackungsmaterial ist eine Luftpolsterfolie, also eine Kunststofffolie, die mit Luft gefüllte Taschen aufweist, durch die mechanische Erschütterungen abgefedert werden können. Diese Luftpolsterfolien weisen allerdings den Nachteil auf, dass sie in der Regel aus Kunststoffen auf Erdölbasis hergestellt werden und ihre Herstellung und Entsorgung mit großen ökologischen Eingriffen verbunden sind. Diese Problematik wird angesichts des steigenden Bedarfs und dem zunehmenden Wunsch nach Nachhaltigkeit verschärft. Es besteht daher der Bedarf nach alternativen Verpackungsmaterialien, die die gleichen Eigenschaften aufweisen, aber eine bessere Umweltverträglichkeit zeigen.

WO 2014/051876 beschreibt eine Klebstoffzusammensetzung, die zur Herstellung von Verpackungsmaterialien verwendet wird, wobei die Klebstoffzusammensetzung Mikrokügelchen aufweist, die eine isolierende Wirkung haben.

DE 20 2011109 020 beschreibt einen Verbundkörper bestehend aus einem Trägersubstrat aus natürlichen Fasern und mindestens einer verklebten Substratschicht aus einem flexiblen folienförmigen Substrat, die mit einer getrockneten Klebstoffschicht vollständig verbunden sind, wobei die Klebstoffschicht aus Basis eines wässrigen geschäumten Klebstoffs hergestellt ist.

WO 2010/129493 offenbart eine aufblasbare Versandtasche, die eine aufblasbare Auskleidung und einen Anschluss aufweist, durch den die Auskleidung aufgeblasen werden kann.

Die im Stand der Technik beschriebenen Materialien sind in der Regel nur durch aufwendige Herstellungsverfahren zugänglich, wodurch die Menge, die hergestellt werden kann, begrenzt ist. Des Weiteren haben die herkömmlichen Materialien den Nachteil, dass die aufgrund der eingebrachten Polsterschicht ein hohes Volumen aufweisen, was insbesondere bei Transport und Lagerung des Materials hohe Kosten verursachen kann.

Der vorliegenden Erfindung liegt daher die Aufgabe zugrunde, ein Verfahren zur Verfügung zu stellen, das die Herstellung eines Verpackungsmaterials erlaubt, das mechanische Stöße absorbieren kann und einfach gelagert und transportiert werden kann.

Es wurde überraschend gefunden, dass diese Aufgabe durch ein Verfahren zur Herstellung eines mehrschichtigen Substrats gelöst wird, das eine multifunktionale Beschichtung aufweist.

Ein erster Gegenstand der vorliegenden Erfindung ist daher ein Verfahren zur Herstellung eines mehrschichtigen Substrats umfassend die folgenden Schritte:
a) Bereitstellen eines ersten Materials mit einer ersten Oberfläche mit mindestens einem Randbereich und mindestens einem von dem Randbereich umschlossenen Innenbereich;
b) Aufbringen eines Beschichtungsmaterials auf den Innenbereich der ersten Oberfläche, wobei das Beschichtungsmaterial expandierbare Mikroteilchen aufweist;
c) Trocknen des Beschichtungsmaterials;
d) Kontaktieren der ersten Oberfläche des ersten Materials mit einer Oberfläche eines zweiten Materials unter Ausbildung des mehrschichtigen Substrats derart, dass sich das Beschichtungsmaterial zwischen dem ersten Material und dem zweiten Material befindet.

Es wurde überraschend gefunden, dass auf diese Weise ein Substrat zugänglich ist, welches ein geringes Volumen aufweist. Das erfindungsgemäße Verfahren zeichnet sich weiterhin dadurch aus, das es die Herstellung des Substrats in großen Mengen erlaubt und ausgeführt werden kann, ohne dass aufwendige Modifikationen der eingesetzten Vorrichtung erforderlich sind.

In einer bevorzugten Ausführungsform weist das erste Material mehr als einen Innenbereich auf.

Das Beschichtungsmaterial wird vorzugsweise vollflächig aufgetragen. Im Sinne der vorliegenden Erfindung ist darunter eine Auftragung derart zu verstehen, dass der komplette Innenbereich mit dem Beschichtungsmaterial bedeckt wird. Um Kosten und Material zu sparen, kann es vorteilhaft sein, das Beschichtungsmaterial intermittierend oder nur partiell aufzutragen, so dass nicht die komplette Fläche des Innenbereichs bedeckt ist. Daher ist eine alternative Ausführungsform bevorzugt, in das Beschichtungsmaterial partiell auf den Innenbereich aufgetragen wird.

In einer bevorzugten Ausführungsform erfolgt das Kontaktieren des ersten und des zweiten Materials unter Verwendung eines Klebstoffs. Dabei wird der Klebstoff vor dem Kontaktieren vorzugsweise auf den Randbereich der ersten Oberfläche aufgetragen. Besonders bevorzugt wird der Klebstoff gleichmäßig beziehungsweise durchgehend auf den Randbereich der ersten Oberfläche aufgetragen, so dass eine vollständige Bedeckung des Randbereichs mit dem Klebstoff erfolgt. Es wurde überraschend gefunden, dass auf diese Weise die Verbundhaftung der Materialien im Substrat verbessert werden kann, ohne dass die Leistungsfähigkeit des Beschichtungsmaterials beeinträchtigt wird. Die Vorteile des erfindungsgemäßen Verfahrens kommen insbesondere dann zur vollen Entfaltung, wenn sichergestellt ist, dass kein Klebstoff auf den Innenbereich gelangt.

In einer bevorzugten Ausführungsform des erfindungsgemäßen Verfahrens liegt das erste und das zweite Material in Form von kontinuierlichen Bahnen vor. In einer alternativ bevorzugten Ausführungsform wird das erste Material vor oder nach Aufbringen des Beschichtungsmaterials in einzelne Einheiten zerteilt, die einen Randbereich und einen von dem Randbereich umschlossenen Innenbereich aufweisen. In einer alternativ bevorzugten Ausführungsform erfolgen das Zerteilen des ersten Materials und das Aufbringen des Beschichtungsmaterials auf den Innenbereich gleichzeitig. Dabei wird prozesstechnisch das Zerschneiden mit dem Aufbringen des Beschichtungsmaterials kombiniert und vorzugsweise in einem kombinierten Schritt vorgenommen.

In einer bevorzugten Ausführungsform ist das erste Material ausgewählt aus der Gruppe bestehend aus Material auf Basis von Cellulose, Kunststoff und Metall. Das erste Material kann beispielsweise Kunstfasern aufweisen, beispielsweise um die Stabilität des Materials zu erhöhen.

Besonders bevorzugt handelt es sich bei dem ersten Material um ein Material auf Basis von Cellulose. Insbesondere ist das erste Material ausgewählt aus der Gruppe bestehend aus Papier, Karton und beschichtetem Papier.

In einer bevorzugten Ausführungsform ist das zweite Material ausgewählt aus der Gruppe bestehend aus Material auf Basis von Cellulose, Kunststoff und Metall. Das zweite Material kann beispielsweise Kunstfasern aufweisen, beispielsweise um die Stabilität des Materials zu erhöhen.

Besonders bevorzugt handelt es sich bei dem zweiten Material um ein Material auf Basis von Cellulose. Insbesondere ist das zweite Material ausgewählt aus der Gruppe bestehend aus Papier, Karton und beschichtetem Papier.

In einer bevorzugten Ausführungsform handelt es sich bei dem ersten und dem zweiten Material um Papier. Besonders bevorzugt liegt das zweite Material in Form einer kontinuierlichen Bahn vor.

Das erfindungsgemäße Verfahren zeichnet sich durch seine schnelle Verfahrensführung aus, was die Herstellung großer Mengen des mehrschichtigen Substrats in kurzer Zeit erlaubt. Dies wird unter anderem durch eine sorgfältige Abstimmung der Eigenschaften der eingesetzten Materialien erreicht. Daher ist eine Ausführungsform der vorliegenden Erfindung bevorzugt, in der das Trocknen des Beschichtungsmaterials bei einer Temperatur von 80°C oder weniger vorgenommen wird, vorzugsweise bei einer Temperatur von 40°C bis 75°C. Es wurde überraschend gefunden, dass bei diesen Temperaturen eine schnelle Trocknung erreicht wird, ohne dass die Leistungsfähigkeit des Beschichtungsmaterials beeinträchtigt wird, wodurch der Verfahrensdurchsatz verbessert wird.

Die besten Ergebnisse bezüglich des Verfahrensdurchsatzes wurden erzielt, wenn ein Beschichtungsmaterial auf Polymerbasis verwendet wurde. Daher ist eine Ausführungsform bevorzugt, in der das Beschichtungsmaterial ein Beschichtungsmaterial auf Polymerbasis ist, das 10 bis 40 Gew.-%, vorzugsweise 15 bis 35 Gew.-% expandierbare Mikroteilchen aufweist, jeweils bezogen auf das Gesamtgewicht des Beschichtungsmaterials. Es hat sich überraschend gezeigt, dass ein solches Beschichtungsmaterial mit einer hohen Geschwindigkeit aufgetragen werden kann, aber gleichzeitig eine ausreichende Stabilität aufweist, um nach dem Auftragen nicht zu verlaufen.

Das im erfindungsgemäßen Verfahren verwendete Beschichtungsmaterial weist expandierbare Mikroteilchen auf. Vorzugsweise haben die Mikroteilchen im nicht expandierten Zustand eine Partikelgröße, ausgedrückt als D50-Wert, von 5 bis 18 µm, vorzugsweise 10 bis 17 µm.

Vorzugsweise handelt es sich bei den expandierbaren Mikroteilchen um thermisch expandierbare Mikroteilchen, die vorzugsweise die Form von Kugeln aufweisen.

In einer bevorzugten Ausführungsform des erfindungsgemäßen Verfahrens wird das mehrschichtige Substrat in einem weiteren Schritt zu einer Verpackung umgesetzt. Diese Umsetzung kann beispielsweise durch Schneiden und Falten des mehrschichtigen Substrats erfolgen. Bei der Verpackung handelt es sich vorzugsweise um einen Umschlag, eine Versandtasche, eine Tüte, eine Tragetasche, einen Beutel oder einen Karton, wobei das Format und die Größe variable sind. In einer besonders bevorzugten Ausführungsform handelt es sich bei der Verpackung um eine Versandtasche.

In einer bevorzugten Ausführungsform umfasst das erfindungsgemäße Verfahren einen weiteren Schritt, in dem das mehrschichtige Substrat einer Behandlung zur Expansion der expandierbaren Mikroteilchen unterzogen wird.

In einer bevorzugten Ausführungsform erfolgt der Wärmebehandlungsschritt im Anschluss Schritt d) des erfindungsgemäßen Verfahrens.

Das erfindungsgemäße Verfahren erlaubt die Herstellung eines Substrats, dessen Volumen durch eine Wärmebehandlung erhöht werden kann, wobei diese Wärmebehandlung unabhängig vom Herstellungsverfahren vorgenommen werden kann. In einer bevorzugten Ausführungsform wird die Wärmebehandlung zeitlich und/oder örtlich getrennt von den anderen Verfahrensschritten durchgeführt. Auf diese Weise ist es möglich, das Substrat im Zustand eines geringen Volumens zu transportieren und zu lagern. Das Substrat erreicht sein endgültiges Volumen durch die Wärmebehandlung, bei der es zu einer Expansion der Mikroteilchen des Beschichtungsmaterials kommt. Das erfindungsgemäße Verfahren ermöglicht es die Wärmebehandlung erst kurz vor Einsatz des Substrats vorzunehmen, was bei herkömmlichen im Stand der Technik beschriebenen Verfahren nicht möglich war. So kann das Substrat beispielsweise zu einer Versandtasche weiterverarbeitet werden, die aufgrund des geringen Volumens und der geringen Dicke wenig Platz in Anspruch nimmt. Vor Gebrauch der Versandtasche kann diese einer Wärmebehandlung unterzogen werden, wodurch die Mikroteilchen expandiert werden und die Versandtasche ihre gewünschte Polsterwirkung entfaltet. Auf diese Weise kann durch das erfindungsgemäße Verfahren wertvolle Lager- und Transportkapazität eingespart werden.

Die Wärmebehandlung erfolgt vorzugsweise bei Temperaturen von 85°C bis 150°C, vorzugsweise 90 bis 140°C. Auf diese Weise wird sichergestellt, dass es zu einer vollständigen Expansion der Mikroteilchen kommt, ohne dass die Mikroteilchen beschädigt werden und ihre schockabsorbierende Wirkung verlieren.

Um eine optimale Absorption mechanischer Einwirkungen zu erreichen, hat es sich als vorteilhaft erwiesen, wenn die Mikroteilchen im expandierten Zustand eine Partikelgröße im Bereich von 20 µm bis 200 µm aufweisen. Daher ist eine Ausführungsform bevorzugt, in der die Mikroteilchen im expandierten Zustand eine Partikelgröße, ausgedrückt als D50-Wert, von 20 µm bis 200 µm aufweisen, vorzugsweise 20 bis 150 µm.

Die Wärmebehandlung wird vorzugsweise mittels konventioneller Wärmequellen vorgenommen. Besonders bevorzugt wird die Wärmebehandlung unter Verwendung von Infrarotstrahlung und/oder Warmluft vorgenommen.

Das nach dem erfindungsgemäßen Verfahren hergestellte mehrschichtige Substrat zeichnet sich durch sein flexibles Volumen aus. Daher ist ein weiterer Gegenstand der vorliegenden Erfindung ein mehrschichtiges Substrat, welches nach dem erfindungsgemäßen Verfahren erhältlich ist. Vorzugsweise liegt das erfindungsgemäße Substrat in Form einer kontinuierlichen Bahn vor. In einer alternativ bevorzugten Ausführungsform liegt das erfindungsgemäße Substrat in Form einer Verpackung vor, vorzugsweise in Form eines Umschlags, einer Versandtasche, einer Tüte, einer Tragetasche, einem Beutel oder einem Karton, wobei das Format und die Größe variable sind.

Das erfindungsgemäße Substrat kann auf einfachem Weg zu einer Verpackung verarbeitet werden. Daher ist ein weiterer Gegenstand ein Verfahren zur Herstellung einer Verpackung unter Verwendung eines mehrschichtigen Substrats, welches nach dem erfindungsgemäßen Verfahren hergestellt wurde, wobei das mehrschichtige Substrat mittels Schneiden und Falten zu einer Verpackung geformt wird.

Ein weiterer Gegenstand der vorliegenden Anmeldung ist eine Verpackung erhältlich gemäß dem erfindungsgemäßen Verfahren. Vorzugsweise handelt es sich bei der Verpackung um einen Umschlag, eine Versandtasche, eine Tüte, eine Tragetasche, einen Beutel oder einen Karton, wobei das Format und die Größe variable sind.

Die vorliegende Erfindung soll anhand des folgenden Beispiels näher erläutert werden, wobei dieses keinesfalls als Einschränkung des Erfindungsgedankens zu verstehen ist.

Ein geeignetes kann Beschichtungsmaterial 30 bis 70 Gew.-% VAE Copolymerdispersion (Vinamul® 3928), 5 bis 15 Gew.-% Paraffindispersion (Michemlube® 743 PE), 15 bis 30 Gew.-% Mikroteilchen (Expancel® 031 WUF 40), 5 bis 10 Gew.-% Glycerin und gegebenenfalls bis zu einem Gew.-% Hxdroxyethylcellulose (MEHC, Natrosol® 250LR) umfassen, wobei sich die Angaben der Gewichtsprozent auf das Gesamtgewicht des Beschichtungsmaterials beziehen und sich zu 100 Gew.-% addieren.

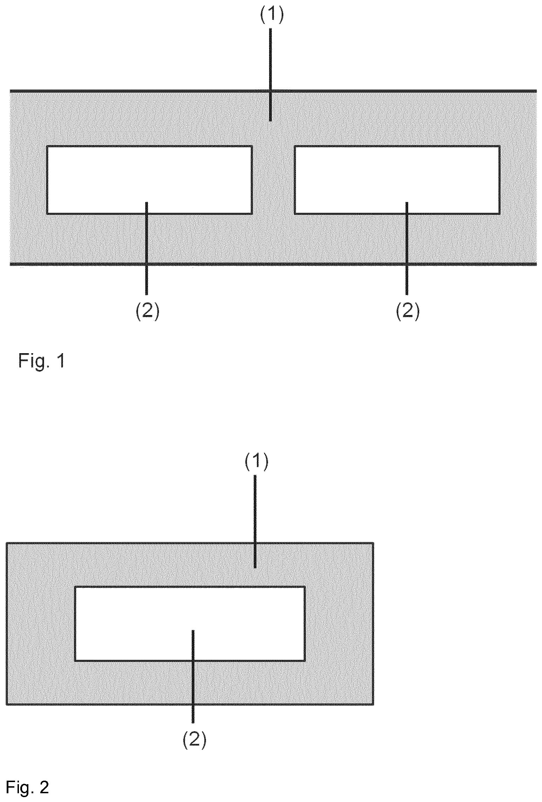

Figur 1 zeigt schematisch das erste Material in Form einer kontinuierlichen Bahn, wobei (1) den Randbereich und (2) den Innenbereich bezeichnet.
Figur 2 zeigt schematisch das erste Material in Form einer einzelnen Einheit, wobei (1) den Randbereich und (2) den Innenbereich bezeichnet.

## Patentansprüche

1. Verfahre zur Herstellung eines mehrschichtigen Substrats umfassend die folgenden Schritte:
a) Bereitstellen eines ersten Materials mit einer ersten Oberfläche mit mindestens einem Randbereich und mindestens einem von dem Randbereich umschlossenen Innenbereich;
b) Aufbringen eines Beschichtungsmaterials auf den Innenbereich der ersten Oberfläche, wobei das Beschichtungsmaterial expandierbare Mikroteilchen aufweist;
c) Trocknen des Beschichtungsmaterials; und
d) Kontaktieren der ersten Oberfläche des ersten Materials mit einer Oberfläche eines zweiten Materials unter Ausbildung des mehrschichtigen Substrats derart, dass sich das Beschichtungsmaterial zwischen dem erstem Material und dem zweiten Material befindet.

2. Verfahren nach Anspruch 1, **dadurch gekennzeichnet, dass** das Kontaktieren in Schritt d) unter Verwendung eines Klebstoffs erfolgt, wobei der Klebstoff vorzugsweise durchgehend auf den Randbereich des ersten Materials aufgetragen wird.

3. Verfahren nach einem oder beiden der Ansprüche 1 oder 2, **dadurch gekennzeichnet, dass** das Beschichtungsmaterial bei einer Temperatur von 80°C oder weniger, vorzugsweise bei einer Temperatur von 40°C bis 75°C getrocknet wird.

4. Verfahren nach einem oder mehrerer der vorangehenden Ansprüche, **dadurch gekennzeichnet, dass** das Beschichtungsmaterial ein Beschichtungsmaterial auf Polymerbasis ist, das 10 bis 40 Gew.-%, vorzugsweise 15 bis 35 Gew.-% expandierbare Mikroteilchen aufweist, jeweils bezogen auf das Gesamtgewicht des Beschichtungsmaterials.

5. Verfahren nach einem oder mehrerer der vorangehenden Ansprüche, **dadurch gekennzeichnet, dass** es sich bei den expandierbaren Mikroteilchen um thermisch expandierbare Mikroteilchen handelt.

6. Verfahren nach einem oder mehrerer der vorangehenden Ansprüche, **dadurch gekennzeichnet**, **dadurch gekennzeichnet, dass** das mehrschichtige Substrat in einem weiteren Schritt zu einer Verpackung umgesetzt wird.

7. Verfahren nach Anspruch 6, **dadurch gekennzeichnet, dass** es sich bei der Verpackung um einen Umschlag, eine Versandtasche, eine Tüte, eine Tragetasche, einen Beutel oder einen Karton handelt.

8. Verfahren nach einem oder mehrerer der vorangehenden Ansprüche, **dadurch gekennzeichnet, dass** das Verfahren einen weiteren Schritt umfasst, in dem das mehrschichtige Substrat einer Behandlung zur Expansion der expandierbaren Mikroteilchen unterzogen wird.

9. Verfahren nach Anspruch 8, **dadurch gekennzeichnet, dass** es sich bei der Behandlung um eine Wärmebehandlung handelt, die vorzugsweise bei einer Temperatur von 85°C bis 150°C, besonders bevorzugt 90°C bis 140°C erfolgt.

10. Verfahren nach einem oder beiden der Ansprüche 8 oder 9, **dadurch gekennzeichnet, dass** die Behandlung zeitlich und/oder örtlich getrennt von den anderen Verfahrensschritten vorgenommen wird.

11. Verfahren nach einem oder mehrerer der vorangehenden Ansprüche, **dadurch gekennzeichnet, dass** es sich bei der Behandlung um eine Wärmebehandlung handelt, die unter Verwendung konventioneller Wärmequellen vorgenommen wird, vorzugsweise unter Verwendung von Infrarotstrahlung und/oder Warmluft.

12. Mehrschichtiges Substrat, welches nach einem Verfahren gemäß einem oder mehrerer der Ansprüche 1 bis 11 erhältlich ist.

13. Mehrschichtiges Substrat nach Anspruch 12, **dadurch gekennzeichnet, dass** das Substrat in Form einer kontinuierlichen Bahn oder einer Verpackung vorliegt.

14. Verfahren zur Herstellung einer Verpackung unter Verwendung eines mehrschichtigen Substrats hergestellt nach einem Verfahren gemäß einem oder mehrerer der Ansprüche 1 bis 11, wobei das mehrschichtige Substrat mittels Schneiden und Falten zu der Verpackung geformt wird.

15. Verpackung erhältlich nach einem Verfahren gemäß Anspruch 14.
